# EUROPEAN PATENT SPECIFICATION

(11) **EP 3 623 322 B1**
(45) Date of publication and mention of the grant of the patent: **15.02.2023**
(21) Application number: 18201075.1
(22) Date of filing: 17.10.2018
(51) Int. Cl.: B65G 45/26, B65G 69/10, B65G 21/00, B65G 43/00

(54) **REMNANTS COVER AND METHOD FOR TRANSFERRING REMNANTS COVER**
ABDECKUNG FUER TRUEMMERTEILE UND VERFAHREN ZUM TRANSFER DER ABDECKUNG
TELEMENT DE PROTECTION POUR DEBRIS ET METHODE DE TRANSFERT DE CET ELEMENT

(30) Priority: 17.10.2017 FI 20175911
(43) Date of publication of application: 18.03.2020
(73) Proprietor: Rectec Engineering Oy, 18600 Myllyoja (FI)
(72) Inventor: VÄLI-TORALA, Tapio, 18600 MYLLYOJA (FI)
(74) Representative: Berggren Oy

(56) References cited:
- WO-A1-97/08408
- DE-A1- 3 441 411
- GB-A- 2 170 166
- JP-U- S60 133 833

## Description

The invention relates to a belt conveyor according to the preamble of claim 1, with a remnants cover which is installed under the belt conveyor.

The invention relates also to a method for removing a remnants cover away from under a belt conveyor.

The invention further relates to a method for reinstalling a remnants cover under a belt conveyor.

The purpose of remnants covers is to preclude loose debris from falling onto a workshop floor or on the ground through a gap left between two successive belt conveyors or from a belt conveyor. Remnants covers are further intended for protecting the return rollers of a belt conveyor in compliance with the machinery directive.

Remnants covers are used extensively in mining industry, among others. The remnants cover comprises a fabric or a rigid panel, which lies below a belt conveyor and extends across the length of a conveyor belt or a gap between conveyor belts. In addition, the remnants cover extends in a direction transverse to the conveying direction essentially across the width of a conveyor belt. The remnants covers must be cleaned from time to time. In prior art known solutions, the cleaning has been carried out either by keeping the remnants cover stationary and removing debris from top of the remnants cover manually or mechanically or by designing the actual remnants cover to be movable with transfer elements, such as a carrier pallet equipped with wheels. The on-site cleaning of a remnants cover of debris is a relatively slow process and not necessarily successful at all should one end of the belt conveyor remain close to floor level. The latter problem regarding installations in tight spots and cleanability also exists in a majority of currently employed remnants covers equipped with transfer elements. In addition, a frequent problem with currently available, movable remnants covers is the tedious or awkward reinstallation of a cleaned remnants cover after the remnants cover has been removed and cleaned. JP60133833U discloses a belt conveyor according to the preamble of claim 1.

With the foregoing prior art as a starting point, it was an objective of the present invention to eliminate or at least to alleviate problems occurring in the foregoing prior art. Accordingly, it was an objective in the invention to provide a movable remnants cover which would lend itself to cleaning more easily and faster than before. It was a further objective to design a remnants cover in such way that would allow its easy installation under belt conveyors lying close to floor level, yet enable its easy cleaning and reinstallation.

More specifically, the invention relates to a belt conveyor according to claim 1 comprising a remnants cover installed under a belt conveyor and comprising an elongated fabric, which remnants cover lies below the belt conveyor and extends in a conveying direction of the belt conveyor, and which further extends in a direction transverse to the belt conveyor's conveying direction substantially across the width of a conveying belt, as well as moving elements by means of which said fabric is movable away from under the belt conveyor with fabric moving elements. The remnants cover has its fabric moving elements comprising transfer members, such as cables, for the fabric, coupled to both lengthwise edges of the remnants cover, each of said transfer members having its first end provided with a winding and unwinding device for the transfer members and its second end with a winding and unwinding device for the fabric, whereby
the winding and unwinding device for the fabric comprises a drive shaft and a possible winding roll capable of being operated by means of said drive shaft as well as a crank element in connection with a pulling roll, and
the winding and unwinding device for the transfer members comprises a reel unit, a drive shaft, as well as a crank element in connection with the drive shaft, said reel unit being operable by means of said drive shaft, wherein the winding and unwinding device for the transfer members is either
   a) located in connection with said winding and unwinding device for the fabric and operable with the same drive shaft and crank element as the winding and unwinding device for the fabric, or
   b) functionally in communication with said winding and unwinding device (7) for the fabric, but operable with its own drive shaft and crank element.

The invention relates also to a method defined in claim 19 for removing a remnants cover away from under a belt conveyor, as well as to a method defined in claim 20 for reinstalling a remnants cover below a belt conveyor.

In a preferred embodiment of the invention, the winding and unwinding device for the fabric and the winding and unwinding device for the transfer members make up jointly a winding and unwinding unit for the fabric and transfer members, said unit being located at a first longitudinal end of the remnants cover. Said winding and unwinding unit for the fabric and transfer members consists of a crank element to which is coupled a drive shaft rotatable around its longitudinal axis, as well as coupling elements for connecting and disconnecting said drive shaft on the one hand to/from a pulling roll of the fabric winding and unwinding device and, on the other hand, coupling elements for connecting and disconnecting said drive shaft to/from a reel unit of the winding and unwinding device for the transfer members.

In another preferred embodiment of the invention, the remnants cover has its first longitudinal end provided with a fabric winding and unwinding device. This winding and unwinding device comprises a drive shaft and a winding roll which is operable by means of said drive shaft, and in connection with the drive shaft is a crank element for operating said drive shaft. The remnants cover has its second end, opposite to the first end in a longitudinal direction of the remnants cover, provided with a winding and unwinding device for the transfer members, which is operable by means of its drive shaft located at said second end of the remnants cover and by means of its crank element, and said winding and unwinding device for the transfer members is functionally in communication with the fabric winding and unwinding device.

The winding and unwinding device for the transfer members is functionally in communication with the fabric winding and unwinding device as follows:
- when the fabric winding and unwinding device is connected to be operated by means of a first drive shaft, the winding and unwinding device for the transfer members has both of its reel units disconnected from a second drive shaft (the clutch is in a disengaged position);
- when the fabric winding and unwinding device is, on the other hand, released from a driving connection with the first drive shaft, the winding and unwinding device for the transfer members is coupled for a driving connection with a second drive shaft.

The invention is based on constructing a remnants cover to be movable by connecting its first end permanently to winding and unwinding devices of the remnants cover, which are located under a belt conveyor and which comprise a drive shaft or preferably a pulling roll around which a fabric of the remnants cover is capable of being wound for periodic cleaning. Hence, the remnants cover has its second end provided with guide elements, such as a pair of idler pulleys, for transfer members of a cable or the like fabric. In connection with the drive shaft is additionally a winding and unwinding device for fabric transfer members, such as a cable, said device preferably comprising a reel unit upon which the cable can be wound and from which the wound-up cable can be unwound.

This type of remnants cover provides a significant benefit in that the entire fabric of a remnants cover, such as a PVC tarpaulin, can be cleaned rapidly by winding it up around a pulling roll. The reinstallation of a remnants cover is simple; the rolledup fabric can be simply pulled by means of cables back to its position under the belt conveyor.

The remnants cover of the invention provides a further significant benefit in that its installation in tight spots can be carried out without problems and yet its cleaning is convenient; if one end of the belt conveyor is near floor level and the belt conveyor is directed upwards, the end near floor level is equipped with winding devices for the remnants cover's fabric. Since the remnants cover's fabric is not actually moved anywhere from under the belt conveyor but just wound into a roll to the other end of the belt conveyor, its reinstallation is easy even in such cramped sites because the fabric is pulled back in place with cables whose winding devices are located in connection with winding devices (a pulling roll connected to the drive shaft) of the remnants cover's fabric.

Thus, in one preferred embodiment of the invention, the remnants cover is employed on a conveying line, wherein the belt conveyor has its conveying direction in an inclined position relative to the plane of a floor or some other foundation.

In another preferred embodiment of the invention, the transfer member is a cable or the like, and the transfer members have a winding and unwinding device thereof provided with a reel unit or the like connectible to a pulling axle (drive shaft).

In yet another preferred embodiment of the invention, as the drive shaft is rotated with a motor or manually in a first direction around its longitudinal axis, the first coupling elements, i.e. coupling elements for the fabric winding and unwinding device, are adapted to connect a drive roll for the fabric winding and unwinding device to rotate along with the drive shaft. Simultaneously, the second coupling elements are in turn adapted to release the reel unit of transfer members' winding and unwinding device from connection with the drive shaft. When the drive shaft is in turn rotated in a second direction around its longitudinal axis, the second coupling elements, i.e. coupling elements for the transfer members' winding and unwinding device, are adapted to connect the reel unit of the transfer members' winding and unwinding device to rotate along with said drive shaft.

In one preferred embodiment of the invention, the remnants cover has one end thereof, opposite to the winding and unwinding unit for the remnants cover's fabric and transfer members, provided with a pair of idler pulleys for controlling the fabric transfer members' travelling direction.

In a remnants cover of the invention, the winding of the remnants cover's fabric (tarpaulin) onto a drive shaft or a pulling roll, and the winding of fabric transfer cables onto a reel, is performed as follows:
As the drive shaft or pulling roll is rotated in a first direction around its longitudinal axis, the first coupling elements of a fabric winding and unwinding device connect the fabric winding and unwinding device's pulling roll to rotate along with the drive shaft, and simultaneously the second coupling elements in turn release the reel unit of the winding and unwinding device for transfer members from connection with the drive shaft. Thereby, the fabric winds up around the pulling roll as the drive shaft is rotated around its longitudinal axis in a first direction. At the same time, the reel unit of a winding and unwinding device for transfer members, such as a cable, is in a disengaged condition and the fabric transfer members, such as a cable, are allowed to unwind from the reel unit as the fabric is being wound around the pulling roll.

When it is desirable, for example after a cleaning operation, to reinstall the remnants cover under a belt conveyor into its covering position, the drive shaft is in turn rotated in its second, opposite direction. Hence, the second coupling elements connect the reel unit of the winding and unwinding device for transfer members, such as a cable, to rotate along with the drive shaft. Thereby, the reel unit of the winding and unwinding device for transfer members, being connected to the drive shaft, winds the transfer members on the reel unit of the winding and unwinding device and the transfer members pull the fabric wound on top of a traction device back to its position under the conveyor belt.

In a second preferred embodiment of the invention, the remnants cover has its first longitudinal end provided with a fabric winding and unwinding device which is operable by means of a first drive shaft. In addition the remnants cover has its second end, opposite to the first end in a longitudinal direction of the remnants cover, provided with a winding and unwinding device for transfer members, which is operable by means of a second drive shaft. The winding and unwinding device for transfer members is functionally in communication with the fabric winding and unwinding device by way of the transfer members such as cables.

The remnants cover according to the second preferred embodiment of the invention can be operated as follows: the first drive shaft is rotated around its longitudinal axis and the pulling roll of the fabric winding and unwinding device is connected by way of coupling elements to rotate along with the drive shaft driven by an electric motor. At the same time, the winding and unwinding device for transfer members has its reel unit released from a connection with the second drive shaft (disengaged position).

The fabric is wound around a winding roll by rotating the first drive shaft around its longitudinal axis by means of an electric motor. The cable is allowed to discharge from the reel unit by winding fabric around the winding roll.

The remnants cover is reinstalled below a belt conveyor as follows:
- connecting the reel unit of the winding and unwinding device for fabric transfer members, such as a cable, by way of second coupling elements to rotate along with the second drive shaft,
- releasing the pulling roll of the fabric winding and unwinding device from a connection with the first drive shaft,
- winding the transfer members onto the reel unit of the winding and unwinding device, whereby the transfer members pull a fabric wound upon the pulling roll back to its position below a belt conveyor.

In one preferred embodiment of the invention, the remnants cover is located below a belt conveyor and, additionally, there is a similar windable remnants cover also alongside and/or on top of the belt conveyor. This provides an effective encapsulation of the sides and exterior of a belt conveyor, nor is moisture able to reach the belt conveyor from above.

The prior art has been presented in patent document GB 660756 discloses a fabric used as a remnants cover, which is located below a belt conveyor and which is removable from under the belt conveyor by means of transfer elements. However, the remnants cover known from this particular patent document includes neither fabric transfer members coupled to each lengthwise edge of the remnants cover nor the transfer members' winding and unwinding devices present at each end of these transfer members and including a drive shaft and a crank element in association therewith. Neither does the cited patent document indicate that the winding and unwinding device for transfer members is located in connection with a fabric winding and unwinding device and is operable with the same crank element as the fabric winding and unwinding device.

The invention will now be described in even more detail with reference to the accompanying figures.
Fig. 1 shows one embodiment for a belt conveyor comprising a remnants cover according to the invention, in which a belt conveyor equipped with the remnants cover is depicted in a diagonal side view.
Fig. 2 shows in a diagonal bottom view one end of the belt conveyor of fig.1, depicting a pair of idler pulleys for transfer members.
Fig. 3 shows likewise in a diagonal bottom view a first end of the belt conveyor of fig. 1, which is fitted with winding and unwinding devices for the transfer members of a remnants cover's fabric, as well as with winding and unwinding devices for the fabric.
Fig. 4 shows in a diagonal top view the winding and unwinding devices for a fabric of the remnants cover shown in fig. 1.
Fig. 5A shows, along a section A-A in fig. 6B, an electric motor, a winding roll, and a reel unit used for winding and unwinding the remnants cover's fabric and transfer members.
Figs. 5B-5C show an alternative embodiment for the implementation of a winding and unwinding device for the fabric as well as a winding and unwinding device for the transfer members depicted in fig. 5A.
Figs. 5D and 5E show still another embodiment for the implementation of a winding and unwinding device for the fabric as well as a winding and unwinding device for the transfer members depicted in fig. 5A.
Fig. 6A shows schematically, in a view from above, a belt conveyor comprising a remnants cover according to the invention and its operating principle.
Fig. 6B shows schematically, in a view from the side, the remnants cover of fig. 6A.
Fig. 6C shows schematically, in a view from above, a second embodiment for the belt conveyor comprising a remnants cover according to the invention and its operating principle.
Figs. 7A and 7B show another belt conveyor comprising a remnants cover according to the invention on a conveying line, wherein the remnants cover is installed under a belt conveyor set in an inclined position.
Fig. 7C shows another belt conveyor comprising a remnants cover according to the invention on a conveying line, wherein one remnants cover is installed under a belt conveyor set in an inclined position and the other remnants cover alongside the belt conveyor.
Fig. 8 shows how a drive shaft used in the remnants cover is connected to a hand crank.

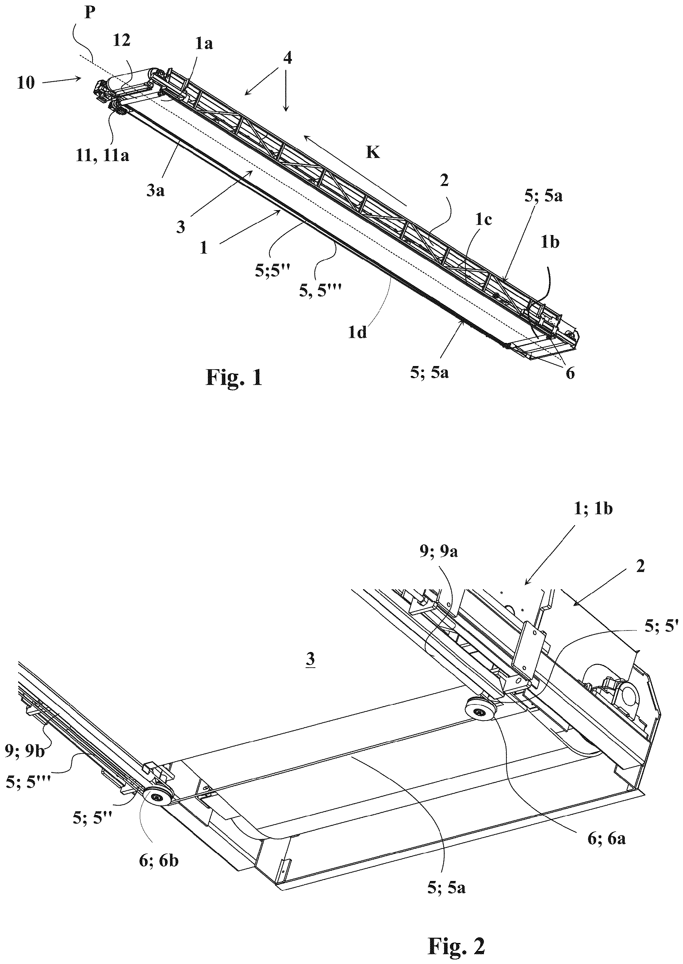

Fig. 1 shows one belt conveyor 2 with a conveying direction K and a lengthwise center line P. Below the belt conveyor is installed a remnants cover 1 for blocking the fall of loose debris from the belt conveyor onto a workshop floor or on the ground. The remnants cover 1 comprises an elongated fabric 3, in this case a PVC fabric such as Ferrari stam 7002, extending in the conveying direction K of the belt conveyor 2 from the conveyor's end to end. In addition, the fabric 3 extends in a direction transverse to the conveying direction K of the belt conveyor 2 essentially across the width of a conveying belt of the belt conveyor 2 and proceeds codirectionally with the belt conveyor 2 at a distance from its bottom surface.

The remnants cover 1 visible in fig. 1 includes also moving elements 4 for the fabric 3, by means of which the fabric 3 is movable on the one hand away from under the belt conveyor 2 and, on the other hand, back to its position below the belt conveyor 2. Said moving elements 4 for the fabric 3 comprise transfer members 5 for the fabric 2, such as cables 5; 5a, which are coupled to both lengthwise P edges 1c and 1d of the remnants cover 1 visible in fig. 1. The cable 5a has its first end provided with a reel unit for the winding and unwinding device of the transfer members 5 and its second end with a pulling roll for the fabric winding and unwinding device.

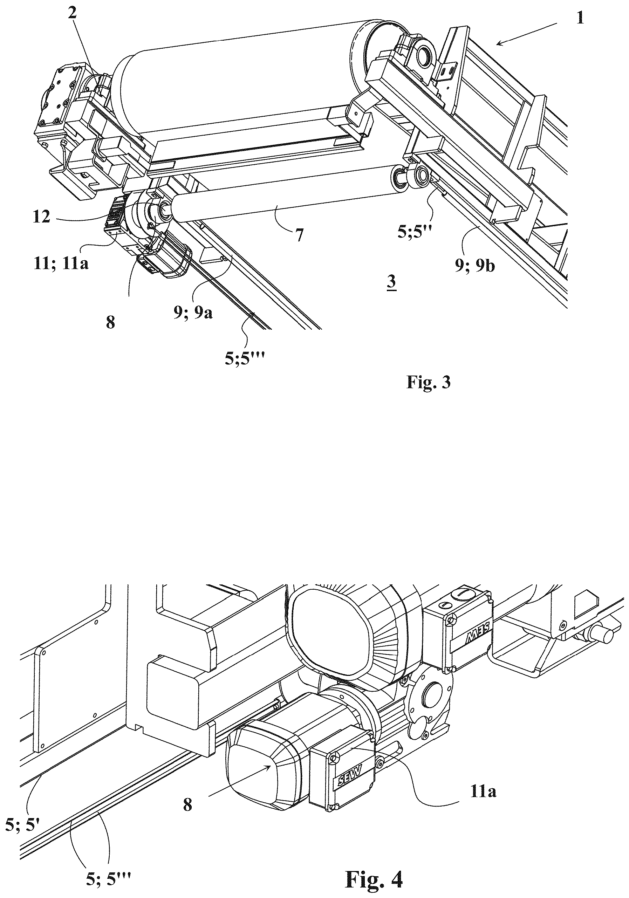

The winding and unwinding device for the transfer members 5 is presented more accurately in figs. 2, 3 and 4, and a fabric winding and unwinding device 7 in fig. 3.

The winding and unwinding device 7 for the fabric 3, visible in fig. 3, comprises a winding roll 12 for gathering the fabric 3 as well as for discharging the fabric 3 by means of a drive shaft 11c, which can be connected to and disconnected from the winding roll 12. In fig. 3, the drive shaft 11 is connected to an electric motor 11; 11a rotating the same.

As can be seen from fig. 3, a reel unit 8a for a winding and unwinding device 8 of the transfer members 5 is located in connection with said winding and unwinding device 7 for the fabric 3 and is operable with the same drive shaft 11c and with a crank element coupled to the drive shaft, i.e. with the electric motor 11; 11a, as a pulling roll of the winding and unwinding device 7 for the fabric 2.

In the embodiment of the invention shown in fig. 3 can be seen a winding and unwinding unit 10 for fabric and transfer members. It consists of a winding and unwinding device 7 for the fabric 3 as well as a winding and unwinding device 8 for the transfer members 5. The winding and unwinding unit 10 for fabric and transfer members is located at a first longitudinal end 1a of the remnants cover 1 and consists of an electric motor 11; 11a to which is coupled a drive shaft 11c rotatable around its longitudinal axis.

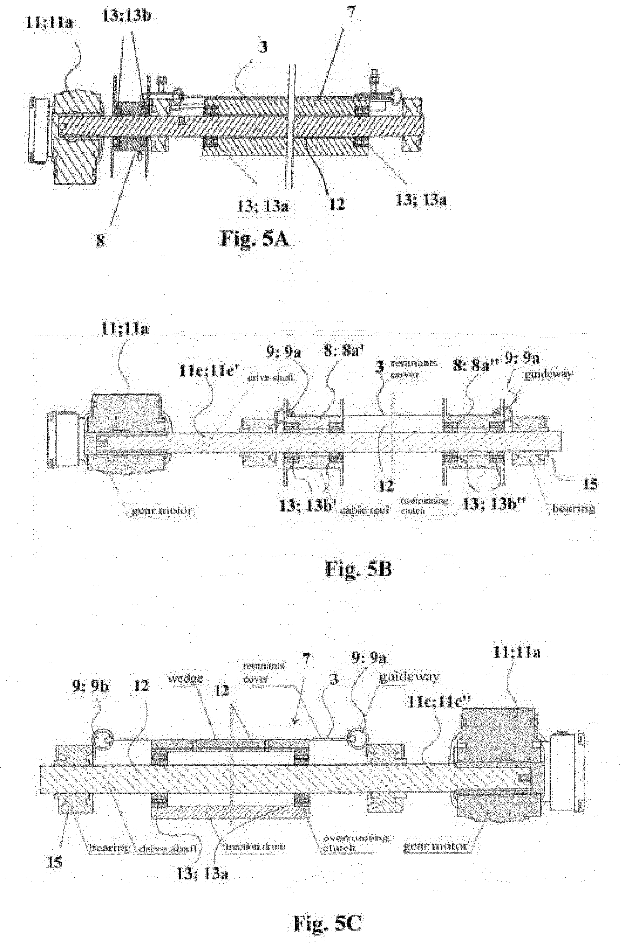

In addition, the winding and unwinding unit 10 for fabric and transfer members includes coupling elements for connecting and disconnecting the drive shaft 11c on the one hand to/from the winding and unwinding device 7/pulling roll 12 of the device for fabric 3 and, on the other hand, coupling elements for connecting and disconnecting the drive shaft to/from the winding and unwinding device 8/reel unit of the device. The coupling elements of the winding and unwinding unit 10 for fabric and transfer members are illustrated in more detail, among others, with section views shown in figs. 5A-5D.

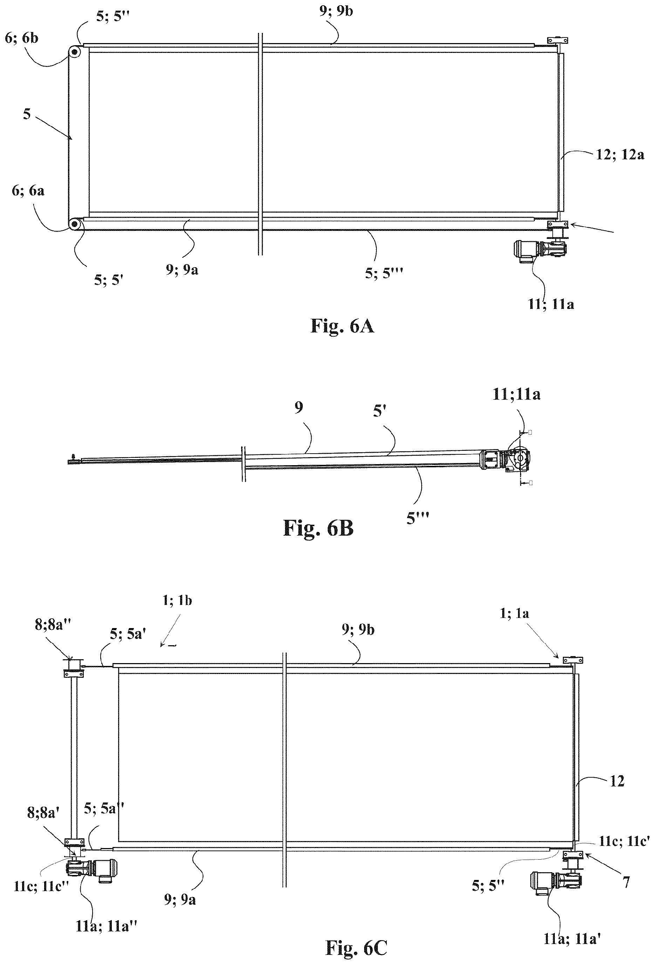

In the section view of fig. 6B, illustrated in fig. 5A, can be seen coupling elements 13; 13a and 13; 13b included in the winding and unwinding unit 10 for fabric and transfer members. Said coupling elements 13a, 13b are used respectively for connecting a winding roll 12 of the winding and unwinding device 7 for the fabric 3 as well as a reel unit 8a of the winding and unwinding device 8 for the transfer members 5 to be rotated by way of the drive shaft 11c or into a disengaged position. The drive shaft 11c is driven by means of an electric motor 11a (short circuit motor).

When the drive shaft 11c is rotated in a first direction, such as counterclockwise, around its longitudinal axis by means of the electric motor 11c, it is the coupling elements 13; 13a which couple the ending roll 12 of the winding and unwinding device 7 to rotate along with the drive shaft 11c. At the same time, the second coupling elements (13; 13b), i.e. the coupling elements 13; 13b of the winding and unwinding device 8 for the transfer members 5 of fabric 3, are adapted to release the reel unit 8a of the winding and unwinding device 8 for the transfer members 5 from its connection with the drive shaft 11c.

On the other hand, when the drive shaft 11c is rotated in an opposite direction, such as clockwise, around its longitudinal axis, it is the coupling elements 13; 13b of the winding and unwinding device 8 for the transfer members 5 of fabric 3 which couple the reel unit 8a of the winding and unwinding device 8 for transfer members 5 to rotate along with said winding axle 12. At the same time, the first coupling elements 13; 13a are adapted to release the pulling roll 12 of the winding and unwinding device 7 for fabric 2 from its connection with said drive shaft 11c.

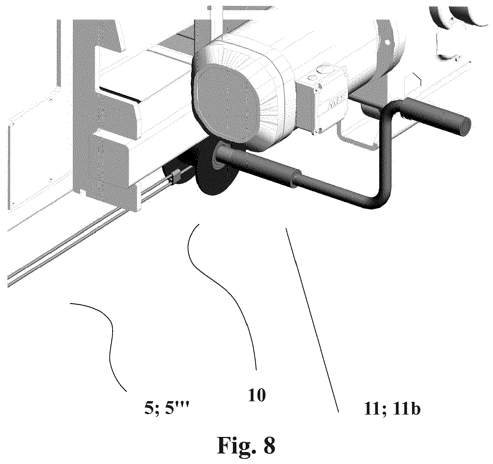

As opposed to the electric motor 11c, the drive shaft 11c (drive axle) can also be operated manually by means of a hand crank 11b illustrated in the embodiment of fig. 8.

It is in figs. 5B and 5C that an alternative approach is depicted for designing winding and unwinding device 7 for fabric 2 as well as a winding and unwinding device 8 for fabric and transfer members 5. It is possible, namely, that the winding and unwinding device 7 for fabric 2 as well as the winding and unwinding device 8 for transfer members 5 be implemented by using a winding and unwinding device 7 for fabric 3 as well as a winding and unwinding device 8 for transfer members 5, which are mounted on separate drive shafts 11 c' and 11c' as illustrated for example in fig. 6C.

Next described is the latter option, in which the winding and unwinding device 7 for fabric 3 and the winding and unwinding device 8 for transfer members 5 are mounted on separate drive shafts 11c; 11 c' (fig. 5B) and 11c; 11 c" (fig. 5C) as presented in fig. 6C.

The drive shafts 11 c' and 11c", which are driven with a crank member, are positioned in a transverse direction with respect to the conveying direction of a belt conveyor and below the belt conveyor. Generally, the drive shafts 11 c' and 11 c" are located at the opposite ends of a belt conveyor in a longitudinal direction of the belt conveyor, enabling the entire belt conveyor to be protected with a remnants cover.

Fig. 5B reveals a remnants cover's rear portion whose fabric 3 has both of its lengthwise edges coupled to guideways 9; 9a and 9; 9b, in which guideways extend also cables 5a used as fabric transfer members 5. The winding and unwinding device 8 for transfer members 5, as shown in fig. 5B, includes two side-by-side reel units 8a' and 8a", which are connected to a drive shaft 11c; 11 c" by way of coupling elements 13; 13b' and 13; 13b". The coupling elements may consist for example of magnetic couplings which are opened and closed electrically. It is by means of said coupling elements 13b', 13b" that both reel units 8a' and 8a" of the winding and unwinding device 8 for transfer members 5 are coupled to be rotated by way of the drive shaft 11c; 11 c' concurrently or set into a disengaged position. The drive shaft 11c is driven with an electric motor 11a (short circuit motor). As can be seen from fig. 5B, the winding and unwinding device 8 for transfer members 5 includes two side-by-side reel units 8a' and 8a' with two separate cables departing therefrom and extending to the guideways 9; 9a and 9; 9b.

Fig. 5C reveals a remnants cover's front portion whose fabric 3 has both of its lengthwise edges coupled to guideways 9; 9a and 9; 9b. In these guideways 9a and 9b extend also cables 5a used as fabric transfer members 5. The winding and unwinding device 7 for fabric 3, as shown in fig. 5C, includes a winding drum used as the winding roll 12, which is possible to couple to be driven by a drive shaft 11c; 11 c" through a coupling element 13; 13a. The coupling element can be for example a magnetic coupling, which is opened and closed electrically. It is by said coupling element 13a' that the winding drum of the winding and unwinding device 7 for fabric 3 is coupled either to rotate with the drive shaft or to a disengaged configuration, in which case the winding drum is not in engagement with the drive shaft 11c" but, instead, rotates freely around the same. Thereby, the fabric 3 can be unwound from the drive shaft for example by using cables coming from the reel units of fig. 5B. The drive shaft 11 c" is driven by an electric motor 11a (short circuit motor).

Fig. 6C reveals that the remnants cover 1 has its first longitudinal end 1a provided with a fabric winding and unwinding device 7, which comprises a first drive shaft 11c; 11 c' and a winding roll 12 which is operable by way of said drive shaft 11c; 11 c'. The drive shaft 11 c' is accompanied by an electric motor 11a; 11 a' for operating said drive shaft 11 c'. The remnants cover 1 has its second end 1b, opposite to the first end in a longitudinal direction of the remnants cover, provided with two winding and unwinding devices 8; 8' and 8; 8" for transfer members 5, which are operable by means of the drive shaft 11c; 11 c" and electric motor 11c; 11c" thereof located at said second end 1b of the remnants cover. The winding and unwinding device 8 for transfer members 5 is functionally in communication with the winding and unwinding device 7 for fabric 3 as follows:
- when the fabric winding and unwinding device 7 is coupled to be operated by way of the first drive shaft 11c; 11 c', the winding and unwinding device 8 for transfer members 5 has both of its reel units 8 released from connection with the second drive shaft 11c; 11 c" (the coupling is in a disengaged position).
- when the fabric winding and unwinding device 7 is in turn released from operational connection with the first drive shaft 11c; 11 c', the winding and unwinding device 8 for transfer members 5 has its reel unit 8 coupled for operational connection with the second drive shaft 11c; 11c".

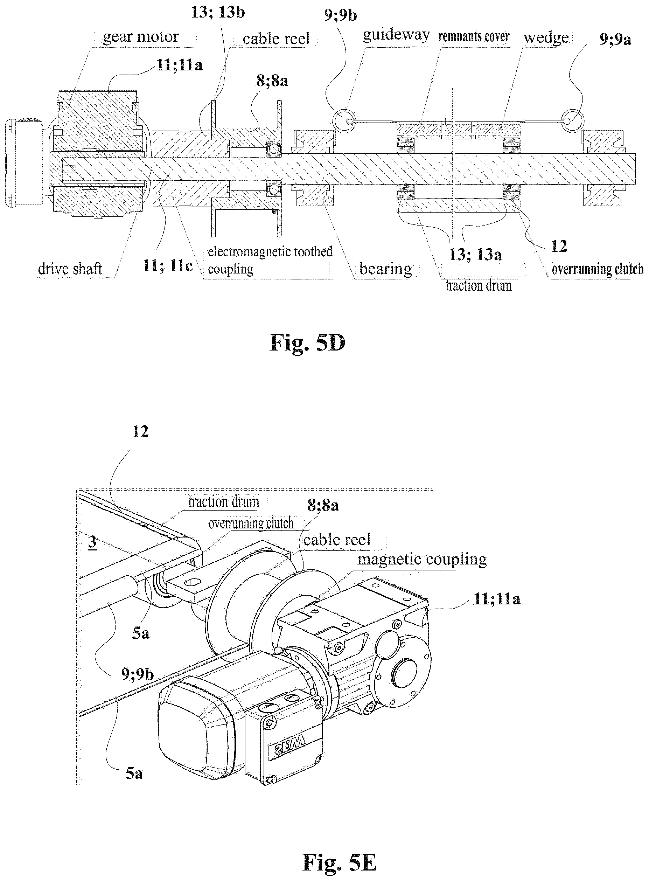

The remnants cover according to an embodiment of the invention as illustrated in figs. 5C, 5D and 6C can be used as follows:
The first drive shaft 11; 11 c' is rotated around its longitudinal axis and the pulling roll 12 of the fabric winding and unwinding device 7 is coupled by the coupling elements 13; 13a to rotate along with the drive shaft 11c; 11 c' driven by an electric motor. At the same time, both reel units 8; 8a' and 8; 8a" of the winding and unwinding device 8 for transfer members are released from connection with the second drive shaft 11c; 11c" (disengaged position).

The fabric 3 is wound around the winding roll 12 by rotating the first drive shaft 11c; 11 c' by means of the electric motor 11; 11a. Both cables 5a' and 5" are allowed to unwind from the respective reel units 8a' and 8" by winding fabric 3 around the winding roll 12 by means of the drive shaft 11c'.

The remnants cover 1 is reinstalled below the belt conveyor 2 as follows:
- both reel units 8a' and 8" of the winding and unwinding device 8 for transfer members 5 of the fabric 3, such as a cable 5a, are coupled by way of the second coupling elements 13; 13b to rotate along with the second drive shaft 11c; 11c".
- The pulling roll 12 of the fabric winding and unwinding device 7 is released from connection with the first drive shaft 11c; 11c' by means of a coupling element. The coupling element may also be a magnetic coupling as illustrated for example in figs. 5D and 5E.
- The transfer members 5, such as cables 5a' and 5a", are wound upon the winding and unwinding device's reel units 8a' and 8a", whereby the fabric 3 wound on top of the pulling roll 12 is drawn by the cables 5a' and 5a' back to its position below the belt conveyor 2.

Figs. 5D and 5E depict still another alternative approach for implementing the winding and unwinding unit 10 for fabric and transfer members, as shown in fig. 5A, by using an electromagnetic toothed coupling 13; 13b for switching a drive of the reel unit 8; 8a by the drive shaft 11; 11c on and off. The winding and unwinding unit 10 for fabric and transfer members, as presented in fig. 5D, is otherwise similar to the winding and unwinding unit 10 for fabric and transfer members, as presented in fig. 5A, except that, in the embodiment of fig. 5D, the reel unit 8a of the winding and unwinding device 8 for transfer members 5 is capable of being connected by a magnetic coupling 13; 13b to the drive shaft 11c and disconnected from the drive shaft (disengaged position).

Fig. 5D reveals coupling elements 13; 13a and 13; 13b included in the winding and unwinding unit 10 for fabric and transfer members, the latter of such elements consisting of a magnetic coupling 13; 13b. It is by means of said coupling elements 13a, 13b that the winding roll 12 of the winding and unwinding device 7 for fabric 3 as well as the reel unit 8a of the winding and unwinding device 8 for transfer members 5 are connected respectively to be rotated by way of the drive shaft 11c used as a traction axle or set in a disengaged position as previously described in connection with fig. 5A. The drive shaft is operated by an electric motor 11a (gear motor with a possible disengaged position).

When the drive shaft 11c is rotated in a first direction, such as counterclockwise, around its longitudinal axis with an electric motor 11c, it is the coupling elements 13; 13a of the winding and unwinding device 7 for fabric 3 which couple the winding roll 12 of the winding and unwinding device 7 for fabric 3 to rotate along with the drive shaft 11c. At the same time, the magnetic coupling 13; 13b is adapted to release the reel unit 8a of the winding and unwinding device 8 for transfer members 5 from connection with the drive shaft 11c.

When the drive shaft 11c is in turn rotated in an opposite direction, such as clockwise, around its longitudinal axis, it is the magnetic coupling which couples the reel unit 8a of the winding and unwinding device 8 for transfer members 5 to rotate along with said winding axle 12. At the same time, the first coupling elements 13; 13a are adapted to release the pulling roll 12 of the winding and unwinding device 7 for fabric 2 from connection with said drive shaft 11c.

In fig. 2 is illustrated a pair of idler pulleys 6; 6a, 6b, which is present at a second longitudinal end 1b of the remnants cover 1, opposite to the winding and unwinding unit 10 for fabric and transfer members of the remnants cover 1, and which is used for controlling passage of the transfer member 5 of a fabric 3. In the embodiment of the invention, as displayed in fig. 2, the employed fabric transfer members are made up of a cable 5a. The remnants cover 1 further comprises slideways 9; 9a and 9; 9b 9 lengthwise of the belt conveyor (and fabric) 2, extending along each lengthwise edge 3; 3a and 3; 3b of the fabric 3 and best displayed in fig. 2. The lengthwise edges 3a, 3b of fabric 3 and the respective transfer members 5' as well as 5" are capable of being fitted in these slideways 9; 9a and 9; 9b in a slidable manner. Said slideways 9a, 9b have a first end thereof provided with a winding and unwinding unit 10 for fabric and transfer members and the slideways have a second, i.e. opposite end thereof, provided with a pair of idler pulleys 6 for controlling the traveling direction of the transfer members 5 of fabric 3.

Passage for the transfer members 5 of the fabric 3 from the reel unit 8a of the winding and unwinding unit 8 for transfer members to the pair of idler pulleys 6, and further to the pulling roll 12 of the fabric winding and unwinding device, is apparent from figs. 2, 3 and also from figs. 6A and 6B. As can be seen from said figures 2, 6A and 6B, the transfer member 5 has its first part, which comprises a pair of transfer members 5; 5‴, coupled onto the reel unit 8a of the winding and unwinding device 8 for fabric 2, said reel unit being rotatable, as described earlier, via the drive shaft 11c (traction axle) either by an electric motor or manually. From the reel unit 8a, the transfer members 5' and 5" of the pair of transfer members 5; 5‴ pass onto the aforesaid pair of idler pulleys 6; 6b or 6; 6a to a second end of the remnants cover and the belt conveyor. It is the pair of idler pulleys 6; 6b and 6; 6a which deflects the respective transfer members 5; 5' and 5; 5' into an interior of the respective slideway 9; 9b and 9; 9a. The transfer members 5' and 5" travel, while being coupled to the edges 3a and 3b of the remnants cover's fabric 3, inside the slideways 9a and 9b all the way to the pulling roll 12 visible in fig. 3.

The remnants cover's 1 fabric 3 is now removed from below a belt conveyor as follows:
The drive shaft 11c is rotated around its longitudinal axis in a first direction, such as clockwise, by means of a drive. The drive is either an electric motor or a manual crank. As a result, the pulling roll 12 of the winding and unwinding device 7 for fabric 3 is coupled to rotate along with the drive shaft 11c by way of first coupling elements 13; 13a, i.e. the coupling elements of the fabric winding and unwinding device. At the same time, the reel unit 8a of the winding and unwinding device 8 for transfer members 5 is released from connection with the drive shaft 11c by way of second coupling elements 13; 13b, i.e. the coupling elements 13; 13b of the winding and unwinding device 8 for transfer members 5. Consequently, the fabric 3 is wound around the pulling roll 12. Since the transfer members 5' and 5", by being coupled to the edges 3a and 3b of fabric 3, also travel all the way to the pulling roll 12, such members are wound around the pulling roll 12 concurrently with the fabric. As the fabric 3 is winding up around the pulling roll 12, the cable 5‴ is pulled thereby from the reel unit 8a which has been released from its connection with the drive shaft 11c.

The remnants cover's 1 fabric 3 is reinstalled to its position below a belt conveyor 2 as follows:
The drive shaft 11c is rotated around its longitudinal axis in its second direction, such as counterclockwise, whereby the winding and unwinding device 8 for transfer members 5 of fabric 3 has its reel unit coupled by way of second coupling elements 13; 13b to rotate along with the drive shaft 11c. At the same time, the pulling roll 12 of the winding and unwinding device 7 for fabric 3 is released from connection with the drive shaft 11 via the first of second coupling elements 13; 13b, i.e. the coupling elements 13; 13b of the winding and unwinding device 8 for transfer members 5. When the drive shaft 11c is now being rotated, the pair of transfer members 5; 5‴ is winding around the reel unit 8b of the winding and unwinding device 8 for transfer members. Since the pair of transfer members 5‴ is coupled to the lengthwise edges 3a, 3b of fabric 3 on the idler pulleys 6; 6a, 6; 6b, the fabric 3, which has been wound on top of the pulling axle 12, is drawn by the transfer members 5 back to its position below the belt conveyor 2.

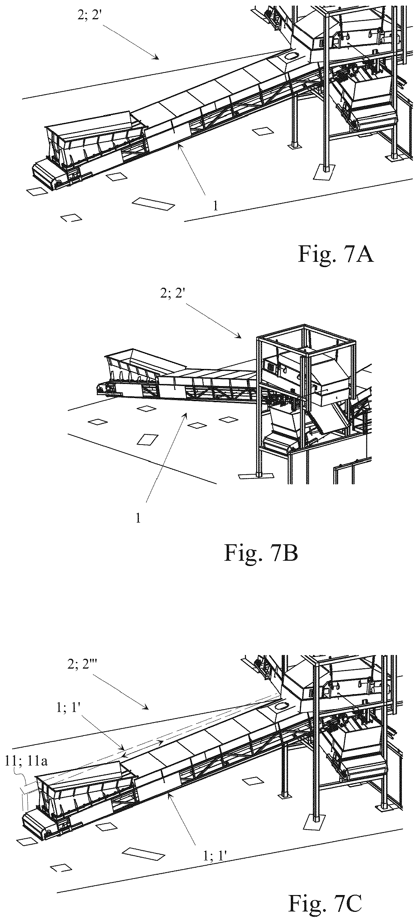

In one preferred embodiment of the invention, the remnants cover 1 is employed as presented in figs. 7A and 7B on a conveying line, wherein the a conveying direction K of the belt conveyor 2 is in an inclined position with respect to the plane of a floor or some other foundation. In this case, the remnants cover 1 has its winding and unwinding unit 10 for fabric and transfer members preferably positioned below a bottom end of the belt conveyor and the remnants conveyor's pair of idler pulleys in turn below a top end of the belt conveyor.

Just a few embodiments of the invention have been presented above and it is obvious for a skilled artisan that a multitude of other implementations of the invention are possible within the scope of an inventive concept defined in the claims. Hence, the reel unit of the winding and unwinding device 8 for transfer members and the pulling roll of the fabric winding and unwinding device 7 can also be operated with separate drives and/or with separate drive shafts.

**List of reference numerals**

| | |
|---|---|
| Remnants cover | 1 |
| first end of the remnants cover | 1a |
| second end of the remnants cover | 1b |
| first lengthwise edge | 1c |
| second lengthwise edge | 1d |
| Belt conveyor | 2 |
| Fabric | 3 |
| lengthwise edges | 3a,3b |
| fabric moving elements | 4 |
| transfer members | 5 |
| transfer member | 5', 5", 5‴ |
| cable | 5a |
| pair of idler pulleys | 6 |
| idler pulley | 6a, 6b |
| winding and unwinding device for fabric | 7 |
| winding and unwinding device for transfer members | 8 |
| reel unit | 8a |
| winding and unwinding unit for fabric and transfer members | 10 |
| crank element | 11 |
| electric motor | 11a |
| hand crank | 11b |
| drive shaft | 11c |
| separate drive shafts | 11 c', 11 c" |
| Slideways | 9 |
| slideway | 9a, 9b |
| winding roll | 12 |
| coupling elements | 13 |
| coupling elements of the winding and unwinding device for fabric | 13a |
| coupling elements of the winding and unwinding device for transfer members | 13b |
| Conveying direction of the belt conveyor | K |
| Lengthwise direction of the remnants cover | P |

## Claims

1. A belt (2) conveyor comprising a remnants cover (1) installed under the belt conveyor (2) and said remnants cover comprising an elongated fabric (3), which lies below the belt conveyor (2) and extends in a conveying direction (K) of the belt conveyor (2), and which further extends in a direction transverse to the belt conveyor's conveying direction (K) substantially across the width of a conveying belt of the belt conveyor (2), as well as moving elements by means of which said fabric (3) is movable away from under the belt conveyor (2) with moving elements (4) for the fabric (3), **characterized in that** the remnants cover (1) has its moving elements (4) for the fabric (3) comprising transfer members (5; 5', 5; 5"), such as cables (5a), for the fabric (3), coupled to both lengthwise (P) edges (1c, 1d) of the remnants cover (1), each of said transfer members (5; 5', 5; 5") having its first end provided with a winding and unwinding device (7) for the fabric and its second end with a winding and unwinding device (8) for the transfer members (5), whereby
the winding and unwinding device (7) for the fabric (3) comprises a drive shaft (11c) as a pulling roll (11c) and a possible winding roll (12) capable of being operated by means of said drive shaft (11c) as well as a crank element (11) in connection with the pulling roll (11c), and
the winding and unwinding device (8) for the transfer members (5) comprises a reel unit (8a), a drive shaft (11c), as well as a crank element (11) in connection with the drive shaft, said reel unit being operable by means of said drive shaft (11), wherein the winding and unwinding device (8) for the transfer members (5) is either
a) located in connection with said winding and unwinding device (7) for the fabric (3) and operable with the same drive shaft (11c) and crank element (11) as the winding and unwinding device (7) for the fabric (3), or
b) functionally in communication with said winding and unwinding device (7) for the fabric (3), but operable with its own drive shaft (11c) and crank element (11).

2. A belt conveyor (2) according to claim 1, **characterized in that** the remnants cover (1) has its first lengthwise end provided with a fabric winding and unwinding device (7) which comprises a drive shaft (11c), and a winding roll (12) which is operable by means of said drive shaft (11c; 11c'), and in connection with the drive shaft (11c') is a crank element (11) for driving said drive shaft (11c'), and the remnants cover (1) has its second end, opposite to the first end in a lengthwise direction of the remnants cover, provided with a winding and unwinding device (8) for transfer members (5), which is operable by means of its drive shaft (11c; 11c") located at said second end of the remnants cover and by means of its crank element (11c; 11c"), and said winding and unwinding device (8) for the transfer members (5) is functionally in communication with the winding and unwinding device (7) for the fabric (3).

3. A belt conveyor (2) according to claim 2, **characterized in that**, when the fabric winding and unwinding device (7) is coupled to be operated by means of a first drive shaft (11c; 11c'), the winding and unwinding device (8) for transfer members (5) has its reel unit (8) released from driving connection with a second drive shaft (11c; 11c").

4. A belt conveyor (2) according to claim 3, **characterized in that**, when the fabric winding and unwinding device (7) is released from driving connection with a first drive shaft (11c; 11c'), the winding and unwinding device (8) for transfer members (5) has its reel unit (8) coupled for driving connection with a second drive shaft (11c; 11c").

5. A belt conveyor (2) according to claim 1, **characterized in that** the winding and unwinding device (7) for fabric (3) and the winding and unwinding device (8) for transfer members (5) make up jointly a winding and unwinding unit (10) for fabric and transfer members, which is located at a first lengthwise end (1a) of the remnants cover (1) and which consists of a crank element (11) having coupled thereto a drive shaft (11c) rotatable around its longitudinal axis as well as, on the one hand, first coupling elements (13; 13a) for coupling said drive shaft (11c) for driving connection with a winding roll (12) of the winding and unwinding device (7) for fabric (3) and for releasing the drive shaft (11c) from said connection with the winding roll (12) of the winding and unwinding device for fabric (3), and, on the other hand, second coupling elements (13; 13b) for coupling the same drive shaft (11c) on the one hand for driving connection with a reel unit (8a) of the winding and unwinding device (8) for transfer members (5) and, on the other hand, for releasing the drive shaft from connection with the reel unit (8a) of the winding and unwinding device (8) for transfer members (5).

6. A belt conveyor (2) according to any of the preceding claims, **characterized in that** the drive shaft (11; 11c) is further accompanied by coupling elements (13) for coupling the reel unit (8a) and/or the winding roll (12) for driving connection with the drive shaft (11c) or for releasing the same from driving connection with this drive shaft (11; 11c).

7. A belt conveyor (2) according to claim 5 or 6, **characterized in that** the coupling elements (13) comprise a magnetic coupling.

8. A belt conveyor (2) according to any of the preceding claims 5-7, **characterized in that**, when the drive shaft (11; 11c) is rotated in a first direction around its longitudinal axis, the first coupling elements, i.e. the coupling elements (13; 13a) of the winding and unwinding device (7) for fabric (3), are adapted to couple the winding roll (12) of the winding and unwinding device (7) for fabric (2) to rotate along with the drive shaft (11c), and when the drive shaft (11c) is rotated in a second direction around its longitudinal axis, the second coupling elements, i.e. the coupling elements (13; 13b) of the winding and unwinding device (8) for transfer members (5), are adapted to couple the reel unit (8a) of the winding and unwinding device (8) for transfer members (5) to rotate along with said drive shaft (11).

9. A belt conveyor (2) according to claim 8, **characterized in that**, at the same time as the first coupling elements (13; 13a) are on the one hand adapted to couple the pulling roll (12) of the winding and unwinding device (7) for fabric (3) to rotate along with the drive shaft (11c), the second coupling elements (13; 13b) are in turn adapted to release the reel unit (8a) of the winding and unwinding device (8) for transfer members (5) from connection with the drive shaft (11; 11c).

10. A belt conveyor (2) according to claim 9, **characterized in that**, at the same time as the second coupling elements (13; 13b) are adapted to couple the reel unit (8a) of the winding and unwinding device (8) for transfer members (5) for connection with the drive shaft (11; 11c) rotated by a drive, the first coupling elements (13; 13a) are adapted to release the pulling roll (12) of the winding and unwinding device (7) for fabric (2) from connection with the same drive shaft (11; 11c).

11. A belt conveyor (2) according to any of the preceding claims 5-10, **characterized in that** the remnants cover (1) has its second lengthwise end (1b), opposite to the winding and unwinding unit (10) for fabric and transfer members present at the first end (1a) of the remnants cover (1), provided with a pair of idler pulleys (6; 6a, 6b) for controlling the traveling direction of the transfer members (5) of fabric (3).

12. A belt conveyor (2) according to claim 11, **characterized in that** both transfer members (5; 5' and 5; 5") for fabric (2) proceed from the pulling roll (12) of the winding and unwinding device (8) for transfer members (5) first to each lengthwise edge (3a, 3b) of the fabric, then to the idler pulley (6; 6b and 6; 6a), and thereafter, via the same idler pulley (6; 6a and 6; 6b), further onto the pulling roll (12) of the winding and unwinding device (7) for fabric (2).

13. A belt conveyor (2) according to claim 11 or 12, **characterized in that** said remnants cover (1) further comprises slideways (9) lengthwise of the belt conveyor (2) and capable of having both lengthwise edges (3a, 3b) of the fabric (3) accommodated therein, whereby a first end of both slideways (9a, 9b) is provided with a winding and unwinding unit (10) for fabric and transfer members, and a second, i.e. the opposite end, of both slideways (9a, 9b) is provided with a pair of idler pulleys (6) for controlling the traveling direction of the transfer members (5).

14. A belt conveyor (2) according to any of the preceding claims, **characterized in that** the transfer member (5) is a cable (5a) or the like, and the winding and unwinding device (8) for transfer members (5) includes a reel unit (8a) or the like connectible to the drive shaft (11c).

15. A belt conveyor (2) according to claim 1, **characterized in that** the crank element (11) comprises an electric motor (11a) functionally connected to the drive shaft (11; 11c) or a hand crank (11b) connected to the drive shaft (11; 11c).

16. Usage of a remnants cover (1) of the belt conveyor (2) according to claim 1 on a conveying line, wherein the belt conveyor (2) has its conveying direction (K) in an inclined position with respect to the plane of a floor or the like foundation.

17. Usage of a remnants cover (1) of the belt conveyor (2) according to claim 1 between two belt conveyors (2, 2).

18. Usage of a remnants cover (1) of the belt conveyor (2) according to claim 1 below a belt conveyor, whereby the belt conveyor is further provided with a remnants cover (1) alongside and/or above the same.

19. A method for moving a remnants cover of the belt conveyor (2) according to claim 1 away from under a belt conveyor (2), **characterized in that** the method comprises the following steps of:
- rotating a drive shaft (11; 11c) around its longitudinal axis in a first direction and simultaneously coupling, by way of first coupling elements (13; 13a), i.e. the coupling elements of a fabric winding and unwinding device, a pulling roll (12) of the fabric winding and unwinding device (7) to rotate along with the drive shaft (11c), and releasing a reel unit (8a) of a winding and unwinding device (8) for transfer members from connection with said drive shaft (11c),
- winding a fabric (3) around the winding roll (12) by rotating said drive shaft (11c) around its longitudinal axis in said first direction,
- allowing transfer members (5), such as a cable (5a), to unwind from the reel unit (8a) of the winding and unwinding device (8) while the fabric (3) is being wound around the winding roll (12).

20. A method for reinstalling a remnants cover (1) of the belt conveyor (2) according to claim 1 below a belt conveyor (2), **characterized in that** the method comprises the following steps of:
- rotating a drive shaft (11) around its longitudinal axis in a second direction and simultaneously coupling, by way of second coupling elements (13; 13b), i.e. the coupling elements of a fabric winding and unwinding device, a reel unit (8a) of a winding and unwinding device (8) for transfer members (5) of fabric (3), such as a cable (5a), to rotate along with the drive shaft (11),
- winding the transfer members (5) onto the reel unit (8a) of the winding and unwinding device, whereby the fabric (3), which has been wound upon the pulling roll (12), is withdrawn by the transfer members (5) back to its position below the belt conveyor (2).

21. A method according to claim 19, **characterized in that** the method further comprises cleaning of the fabric (3).

22. A method for moving a remnants cover (1) of the belt conveyor (2) according to claim 1 away from under a belt conveyor (2), wherein a winding and unwinding device (8) for transfer members (5) is functionally in communication with a winding and unwinding device (7) for a fabric (3), yet operable with its own drive shaft (11c; 11c") and crank element (11), **characterized in that** the method comprises the following steps of:
- rotating a first drive shaft (11; 11c') around its longitudinal axis and coupling a pulling roll (12) of the fabric winding and unwinding device (7) by way of coupling elements (13; 13a) to rotate along with the first drive shaft (11c; 11 c') and releasing a roll unit (8a) of a winding and unwinding device (8) for transfer members from connection with a second drive shaft (11c; 11c"),
- winding the fabric (3) around the winding roll (12) by rotating said first drive shaft (11c; 11c') around its longitudinal axis,
- allowing transfer members (5), such as a cable (5a) to unwind from the reel unit (8a) of the winding and unwinding device (8) while the fabric (3) is being wound around the winding roll (12).

23. A method for reinstalling a remnants cover (1) of the belt conveyor (2) according to claim 1 below a belt conveyor (2), **characterized in that** the method comprises the following steps of:
- coupling, by way of second coupling elements (13; 13b), i.e. the coupling elements of a fabric winding and unwinding device, a reel unit (8a) of a winding and unwinding device (8) for transfer members (5) of fabric (3), such as a cable (5a), to rotate along with a second drive shaft (11c; 11c"),
- releasing a pulling roll (12) of a fabric winding and unwinding device (7) from connection with a first drive shaft (11c; 11c'),
- winding the transfer members (5) upon the reel unit (8a) of the winding and unwinding device, whereby the fabric, which has been wound upon the pulling roll (12), is withdrawn by the transfer members (5) back to its position below the belt conveyor (2).

## Patentansprüche

1. Bandförderer (2), umfassend eine unter dem Bandförderer (2) installierte Resteabdeckung (1), und wobei die Resteabdeckung ein längliches Gewebe (3) umfasst, das unterhalb des Bandförderers (2) liegt und sich in einer Förderrichtung (K) des Bandförderers (2) erstreckt, und das sich ferner in einer Richtung quer zur Förderrichtung (K) des Bandförderers im Wesentlichen über die Breite eines Förderbandes des Bandförderers (2) erstreckt, sowie Bewegungselemente, mit denen das Gewebe (3) unter dem Bandförderer (2) mit Bewegungselementen (4) für das Gewebe (3) wegbewegbar ist, **dadurch gekennzeichnet, dass** die Resteabdeckung (1) ihre Bewegungselemente (4) für das Gewebe (3) aufweist, die Übertragungselemente (5; 5', 5; 5") für das Gewebe (3) wie Kabel (5a), die mit beiden Längskanten (P) (1c, 1d) der Restabdeckung (1) verbunden sind, umfassen, wobei jedes der Übertragungselemente (5; 5', 5; 5") an seinem ersten Ende mit einer Auf- und Abwickelvorrichtung (7) für das Gewebe und seinem zweiten Ende mit einer Auf- und Abwickelvorrichtung (8) für die Übertragungselemente (5) versehen ist,
wobei die Auf- und Abwickelvorrichtung (7) für das Gewebe (3) eine Antriebswelle (11c) als Zugrolle (11c) und eine mögliche Wickelrolle (12) umfasst, die mittels der Antriebswelle (11c) sowie einem Kurbelelement (11) in Verbindung mit der Zugrolle (11c) betrieben werden kann, und
die Auf- und Abwickelvorrichtung (8) für die Übertragungselemente (5) eine Aufrolleinheit (8a), eine Antriebswelle (11c) sowie ein Kurbelelement (11) in Verbindung mit der Antriebswelle umfasst, wobei die Aufrolleinheit mittels der Antriebswelle (11) betreibbar ist, wobei die Auf- und Abwickelvorrichtung (8) für die Übertragungselemente (5) entweder
a) in Verbindung mit der Auf- und Abwickelvorrichtung (7) für das Gewebe (3) angeordnet ist und mit derselben Antriebswelle (11c) und demselben Kurbelelement (11) betreibbar ist wie die Auf- und Abwickelvorrichtung (7) für das Gewebe (3), oder
b) funktionell in Verbindung mit der Auf- und Abwickelvorrichtung (7) für das Gewebe (3), aber betreibbar mit seiner eigenen Antriebswelle (11c) und seinem eigenen Kurbelelement (11) ist.

2. Bandförderer (2) nach Anspruch 1, **dadurch gekennzeichnet, dass** die Resteabdeckung (1) an ihrem ersten Längsende mit einer Gewebe-Auf- und Abwickelvorrichtung (7) versehen ist, die eine Antriebswelle (11c) und eine mittels der Antriebswelle (11c; 11c') betreibbare Wickelrolle (12) umfasst, und ein Kurbelelement (11) in Verbindung mit der Antriebswelle (11c') zum Antreiben der Antriebswelle (11c') steht, und die Resteabdeckung (1) an ihrem zweiten Ende, das dem ersten Ende in einer Längsrichtung der Resteabdeckung gegenüberliegt, mit einer Auf- und Abwickelvorrichtung (8) für Übertragungselemente (5) versehen ist, die mittels ihrer Antriebswelle (11c; 11c"), die sich an dem zweiten Ende der Resteabdeckung befindet, und mittels ihres Kurbelelements (11c; 11c") betreibbar ist, und die Auf- und Abwickelvorrichtung (8) für die Übertragungselemente (5) funktionell mit der Auf- und Abwickelvorrichtung (7) für das Gewebe (3) in Verbindung steht.

3. Bandförderer (2) nach Anspruch 2, **dadurch gekennzeichnet, dass**, wenn die Gewebe-Auf- und Abwickelvorrichtung (7) gekoppelt ist, um mittels einer ersten Antriebswelle (11c; 11c') betrieben zu werden, die Auf- und Abwickelvorrichtung (8) für Übertragungselemente (5) ihre Aufrolleinheit (8) aus der Antriebsverbindung mit einer zweiten Antriebswelle (11c; 11c") löst.

4. Bandförderer (2) nach Anspruch 3, **dadurch gekennzeichnet, dass** bei gelöster Gewebe-Auf- und Abwickelvorrichtung (7) aus der Antriebsverbindung mit einer ersten Antriebswelle (11c; 11c')die Auf- und Abwickelvorrichtung (8) für Übertragungselemente (5) mit ihrer Aufrolleinheit (8) mit einer zweiten Antriebswelle (11c; 11c") zur Antriebsverbindung gekoppelt ist.

5. Bandförderer (2) nach Anspruch 1, **dadurch gekennzeichnet, dass** die Auf- und Abwickelvorrichtung (7) für Gewebe (3) und die Auf- und Abwickelvorrichtung (8) für Übertragungselemente (5) gemeinsam eine Aufund Abwickeleinheit (10) für Gewebe und Übertragungselemente bilden, die sich an einem ersten Längsende (1a) der Resteabdeckung (1) befindet und die aus einem Kurbelelement (11), an das eine Antriebswelle (11c) gekoppelt ist, die um ihre Längsachse drehbar ist, sowie einerseits ersten Kopplungselementen (13; 13a) zum Koppeln der Antriebswelle (11c) zur Antriebsverbindung mit einer Wickelrolle (12) der Aufund Abwickelvorrichtung (7) für Gewebe (3) und zum Lösen der Antriebswelle (11c) von der Verbindung mit der Wickelrolle (12) der Auf- und Abwickelvorrichtung für Gewebe (3) und andererseits zweiten Kopplungselementen (13; 13b) zum Koppeln derselben Antriebswelle (11c) einerseits zum Antreiben einer Verbindung mit einer Aufrolleinheit (8a) der Auf- und Abwickelvorrichtung (8) für Übertragungselemente (5) und andererseits zum Lösen der Antriebswelle von der Verbindung mit der Aufrolleinheit (8a) der Auf- und Abwickelvorrichtung (8) für Übertragungselemente (5) besteht.

6. Bandförderer (2) nach einem der vorhergehenden Ansprüche, **dadurch gekennzeichnet, dass** die Antriebswelle (11; 11c) ferner von Kopplungselementen (13) zum Koppeln der Aufrolleinheit (8a) und/oder der Wickelrolle (12) zur Antriebsverbindung mit der Antriebswelle (11c) oder zum Lösen derselben aus der Antriebsverbindung mit dieser Antriebswelle (11; 11c) begleitet ist.

7. Bandförderer (2) nach Anspruch 5 oder 6, **dadurch gekennzeichnet, dass** die Kopplungselemente (13) eine Magnetkupplung umfassen.

8. Bandförderer (2) nach einem der vorhergehenden Ansprüche 5 bis 7, **dadurch gekennzeichnet, dass**, wenn die Antriebswelle (11; 11c) in einer ersten Richtung um ihre Längsachse gedreht wird, die ersten Kopplungselemente, d.h. die Kopplungselemente (13; 13a) der Auf- und Abwickelvorrichtung (7) für Gewebe (3), angepasst sind, die Wickelrolle (12) der Auf- und Abwickelvorrichtung (7) für Gewebe (2) zu koppeln, sich zusammen mit der Antriebswelle (11c) zu drehen, und wenn die Antriebswelle (11c) in einer zweiten Richtung um ihre Längsachse gedreht wird, die zweiten Kopplungselemente, d.h. die Kopplungselemente (13; 13b) der Auf- und Abwickelvorrichtung (8) für Kopplungselemente (5), angepasst sind, die Aufrolleinheit (8a) der Auf- und Abwickelvorrichtung (8) für Übertragungselemente (5) zu koppeln, sich zusammen mit der Antriebswelle (11) zu drehen.

9. Bandförderer (2) nach Anspruch 8, **dadurch gekennzeichnet, dass** zugleich als erste Kopplungselemente (13; 13a) einerseits angepasst sind, die Zugrolle (12) der Auf- und Abwickelvorrichtung (7) für Gewebe (3) zu koppeln, um sich mit der Antriebswelle (11c) zu drehen, die zweiten Kopplungselemente (13; 13b) wiederum angepasst sind, die Aufrolleinheit (8a) der Auf- und Abwickelvorrichtung (8) für Übertragungselemente (5) von der Verbindung mit der Antriebswelle (11; 11c) zu lösen.

10. Bandförderer (2) nach Anspruch 9, **dadurch gekennzeichnet, dass** gleichzeitig als zweite Kopplungselemente (13; 13b) angepasst sind, die Aufrolleinheit (8a) der Auf- und Abwickelvorrichtung (8) für Übertragungselemente (5) zur Verbindung mit der von einem Antrieb gedrehten Antriebswelle (11; 11c) zu koppeln, die ersten Kopplungselemente (13; 13a) dazu angepasst sind, die Zugrolle (12) der Auf- und Abwickelvorrichtung (7) für Gewebe (2) von der Verbindung mit derselben Antriebswelle (11; 11c) zu lösen.

11. Bandförderer (2) nach einem der vorhergehenden Ansprüche 5 bis 10, **dadurch gekennzeichnet, dass** die Resteabdeckung (1) an ihrem zweiten Längsende (1b) gegenüber der am ersten Ende (1a) der Restabdeckung (1) vorhandenen Auf- und Abwickeleinheit (10) für Gewebe und Übertragungselemente mit einem Paar Umlenkrollen (6; 6a, 6b) zum Steuern der Bewegungsrichtung der Übertragungselemente (5) des Gewebes (3) versehen ist.

12. Bandförderer (2) nach Anspruch 11, **dadurch gekennzeichnet, dass** beide Übertragungselemente (5; 5' und 5; 5") für Gewebe (2), von der Zugrolle (12) der Auf- und Abwickelvorrichtung (8) für Übertragungselemente (5) zuerst an jeder Längskante (3a, 3b) des Gewebes, dann zur Umlenkrolle (6; 6b und 6; 6a) und danach über dieselbe Umlenkrolle (6; 6a und 6; 6b) weiter auf die Zugrolle (12) der Auf- und Abwickelvorrichtung (7) für Gewebe (2) verfahren.

13. Bandförderer (2) nach Anspruch 11 oder 12, **dadurch gekennzeichnet, dass** die Resteabdeckung (1) ferner Gleitbahnen (9) in Längsrichtung des Bandförderers (2) umfasst, und in der Lage ist, beide Längskanten (3a, 3b) des Gewebes (3) darin aufzunehmen, wobei ein erstes Ende beider Gleitbahnen (9a, 9b) mit einer Auf- und Abwickeleinheit (10) für Gewebe und Übertragungselemente versehen ist, und ein zweites, d.h. das gegenüberliegende Ende beider Gleitbahnen (9a, 9b) mit einem Paar Spannrollen (6) zum Steuern der Bewegungsrichtung der Übertragungselemente (5) versehen ist.

14. Bandförderer (2) nach einem der vorhergehenden Ansprüche, **dadurch gekennzeichnet, dass** das Übertragungselement (5) ein Seil (5a) oder dergleichen ist, und die Auf- und Abwickelvorrichtung (8) für Übertragungselemente (5) eine Aufrolleinheit (8a) oder dergleichen enthält, die mit der Antriebswelle (11c) verbindbar ist.

15. Bandförderer (2) nach Anspruch 1, **dadurch gekennzeichnet, dass** das Kurbelelement (11) einen mit der Antriebswelle (11; 11c) wirkverbundenen Elektromotor (11a) oder eine mit der Antriebswelle (11; 11c) verbundene Handkurbel (11b) umfasst.

16. Verwendung einer Resteabdeckung (1) des Bandförderers (2) nach Anspruch 1 an einer Förderstrecke, wobei der Bandförderer (2) seine Förderrichtung (K) in einer geneigten Position in Bezug auf die Ebene eines Bodens oder eines ähnlichen Fundaments hat.

17. Verwendung einer Resteabdeckung (1) des Bandförderers (2) nach Anspruch 1 zwischen zwei Bandförderern (2, 2).

18. Verwendung einer Resteabdeckung (1) des Bandförderers (2) nach Anspruch 1 unterhalb eines Bandförderers, wobei der Bandförderer ferner neben und/oder über demselben mit einer Resteabdeckung (1) versehen ist.

19. Verfahren zum Wegbewegen einer Resteabdeckung des Bandförderers (2) nach Anspruch 1 unter einem Bandförderer (2), **dadurch gekennzeichnet, dass** das Verfahren die folgenden Schritte umfasst:
- Drehen einer Antriebswelle (11; 11c) um ihre Längsachse in einer ersten Richtung und gleichzeitiges Koppeln einer Zugrolle (12) der Gewebe-Auf- und Abwickelvorrichtung (7) über erste Kopplungselemente (13; 13a), d.h. die Kopplungselemente einer Gewebe-Auf-und Abwickelvorrichtung, sich zusammen mit der Antriebswelle (11c) zu drehen, und Freigeben einer Aufrolleinheit (8a) einer Auf- und Abwickelvorrichtung (8) für Übertragungselemente aus der Verbindung mit der Antriebswelle (11c),
- Wickeln eines Gewebes (3) um die Wickelrolle (12) durch Drehen der Antriebswelle (11c) um ihre Längsachse in der ersten Richtung,
- Ermöglichen, dass sich Übertragungselemente (5), wie etwa ein Kabel (5a), von der Aufrolleinheit (8a) der Auf- und Abwickelvorrichtung (8) abwickeln, während das Gewebe (3) um die Wickelrolle (12) gewickelt wird.

20. Verfahren zum Wiedereinbau einer Resteabdeckung (1) des Bandförderers (2) nach Anspruch 1 unterhalb eines Bandförderers (2), **dadurch gekennzeichnet, dass** das Verfahren die folgenden Schritte umfasst:
- Drehen einer Antriebswelle (11) um ihre Längsachse in einer zweiten Richtung und gleichzeitiges Koppeln einer Aufrolleinheit (8a) einer Auf- und Abwickelvorrichtung (8) für Übertragungselemente (5) von Gewebe (3), wie beispielsweise ein Kabel (5a), über zweite Kopplungselemente (13; 13b), d.h. die Kopplungselemente einer Gewebe-Auf- und Abwickelvorrichtung, sich mit der Antriebswelle (11) mitzudrehen,
- Aufwickeln der Übertragungselemente (5) auf die Aufrolleinheit (8a) der Auf- und Abwickelvorrichtung, wodurch das Gewebe (3), das auf die Zugrolle (12) gewickelt wurde, durch die Übertragungselemente (5) zurück zu seiner Position unterhalb des Bandförderers (2) zurückgezogen wird.

21. Verfahren nach Anspruch 19, **dadurch gekennzeichnet, dass** das Verfahren ferner das Reinigen des Gewebes (3) umfasst.

22. Verfahren zum Wegbewegen einer Resteabdeckung (1) des Bandförderers (2) nach Anspruch 1 unter einem Bandförderer (2), wobei eine Auf- und Abwickelvorrichtung (8) für Übertragungselemente (5) funktionell mit einer Auf- und Abwickelvorrichtung (7) für ein Gewebe (3) in Verbindung steht, jedoch mit ihrer eigenen Antriebswelle (11c; 11c") und Kurbelelement (11) betreibbar ist, **dadurch gekennzeichnet, dass** das Verfahren die folgenden Schritte umfasst:
- Drehen einer ersten Antriebswelle (11; 11c') um ihre Längsachse und Koppeln einer Zugrolle (12) der Gewebe-Auf- und Abwickelvorrichtung (7) über Koppelelemente (13; 13a), sich zusammen mit der ersten Antriebswelle (11c; 11c') zu drehen, und Lösen einer Aufrolleinheit (8a) einer Auf- und Abwickelvorrichtung (8) für Übertragungselemente von einer Verbindung mit einer zweiten Antriebswelle (11c; 11c"),
- Wickeln des Gewebes (3) um die Wickelrolle (12) durch Drehen der ersten Antriebswelle (11c; 11c') um ihre Längsachse,
- Ermöglichen, dass sich Übertragungselemente (5), wie beispielsweise ein Kabel (5a), von der Aufrolleinheit (8a) der Auf- und Abwickelvorrichtung (8) abwickeln, während das Gewebe (3) um die Aufwickelrolle (12) gewickelt wird.

23. Verfahren zum Wiedereinbau einer Resteabdeckung (1) des Bandförderers (2) nach Anspruch 1 unterhalb eines Bandförderers (2), **dadurch gekennzeichnet, dass** das Verfahren die folgenden Schritte umfasst:
- Koppeln einer Aufrolleinheit (8a) einer Auf- und Abwickelvorrichtung (8) für Übertragungselemente (5) von Gewebe (3), wie beispielsweise ein Kabel (5a), über zweite Kopplungselemente (13; 13b), d.h. die Kopplungselemente einer Gewebe-Auf- und Abwickelvorrichtung, sich zusammen mit einer zweiten Antriebswelle (11c; 11c") zu drehen,
- Lösen einer Zugrolle (12) einer Gewebe-Auf- und - abwickelvorrichtung (7) aus der Verbindung mit einer ersten Antriebswelle (11c; 11c'),
- Aufwickeln der Übertragungselemente (5) auf die Aufrolleinheit (8a) der Auf- und Abwickelvorrichtung, wodurch das Gewebe, das auf die Zugrolle (12) gewickelt wurde, durch die Übertragungselemente (5) zurück zu seiner Position unterhalb des Bandförderers (2) zurückgezogen wird.

## Revendications

1. Convoyeur à bande (2) comprenant un élément de protection pour débris (1) installé sous le convoyeur à bande (2) et ledit élément de protection pour débris comprenant une toile allongée (3), qui se trouve sous le convoyeur à bande (2) et se prolonge dans le sens de transport (K) du convoyeur à bande (2), et qui se prolonge plus loin dans un sens transversal au sens de transport du convoyeur à bande (K), sensiblement sur toute la largeur d'une bande de convoyeur du convoyeur à bande (2), ainsi que des éléments mobiles au moyen desquels ladite toile (3) peut être déplacée loin du dessous du convoyeur à bande (2) avec des éléments mobiles (4) pour la toile (3), **caractérisé en ce que** l'élément de protection pour débris (1) a ses éléments mobiles (4) pour la toile (3) comprenant des éléments de transfert (5 ; 5', 5 ; 5"), tels que des câbles (5a), pour la toile (3), couplés aux deux bords (1c, 1d) longitudinaux (P) d'un élément de protection pour débris (1), chacun desdits éléments de transfert (5 ; 5', 5 ; 5") ayant sa première extrémité munie d'un dispositif d'enroulement et de déroulement (7) pour la toile et sa seconde extrémité d'un dispositif d'enroulement et de déroulement (8) pour les éléments de transfert (5), par lequel
le dispositif d'enroulement et de déroulement (7) de la toile (3) comprend un arbre d'entraînement (11c) comme rouleau de traction (11c)
et un éventuel rouleau d'enroulement (12) pouvant être actionné au moyen dudit arbre d'entraînement (11c) ainsi qu'un élément de vilebrequin (11) en liaison avec le rouleau de traction (11c), et
le dispositif d'enroulement et de déroulement (8) pour les éléments de transfert (5) comprend une unité de bobine (8a), un arbre d'entraînement (11c) ainsi qu'un élément de vilebrequin (11) en liaison avec l'arbre d'entraînement, ladite unité de bobine pouvant être actionnée au moyen dudit arbre d'entraînement (11), dans lequel le dispositif d'enroulement et de déroulement (8) pour les éléments de transfert (5) est soit
a) situé en liaison avec ledit dispositif d'enroulement et de déroulement (7) pour la toile (3) et pouvant être actionné avec le même arbre d'entraînement (11c) et le même élément de vilebrequin (11) que le dispositif d'enroulement et de déroulement (7) pour la toile (3), ou
b) en communication fonctionnelle avec ledit dispositif d'enroulement et de déroulement (7) pour la toile (3), mais pouvant être actionné avec son propre arbre d'entraînement (11c) et son élément de vilebrequin (11).

2. Convoyeur à bande (2) selon la revendication 1, **caractérisé en ce que** l'élément de protection pour débris (1) a sa première extrémité longitudinale munie d'un dispositif d'enroulement et de déroulement de toile (7) qui comprend un arbre d'entraînement (11c), et un rouleau d'enroulement (12) qui peut être commandé au moyen dudit arbre d'entraînement (11c ; 11c'), et en liaison avec l'arbre d'entraînement (11c') est un élément de vilebrequin (11) servant à entraîner ledit arbre d'entraînement (11c'), et l'élément de protection pour débris (1) a sa seconde extrémité, opposée à la première extrémité dans le sens longitudinal de l'élément de protection pour débris, pourvu d'un dispositif d'enroulement et de déroulement (8) pour les éléments de transfert (5), qui peut être commandé au moyen de son arbre d'entraînement (11c ; 11c") situé au niveau de ladite seconde extrémité de l'élément de protection pour débris et au moyen de son élément de vilebrequin (11c ; 11c"), ledit dispositif d'enroulement et de déroulement (8) pour les éléments de transfert (5) étant en communication fonctionnelle avec le dispositif d'enroulement et de déroulement (7) pour la toile (3).

3. Convoyeur à bande (2) selon la revendication 2, **caractérisé en ce que**, lorsque le dispositif d'enroulement et de déroulement de toile (7) est couplé pour être actionné au moyen d'un premier arbre d'entraînement (11c ; 11c'), le dispositif d'enroulement et de déroulement (8) pour les éléments de transfert (5) a son unité de bobine (8) libérée de la liaison d'entraînement avec un second arbre d'entraînement (11c ; 11c") .

4. Convoyeur à bande (2) selon la revendication 3, **caractérisé en ce que**, lorsque le dispositif d'enroulement et de déroulement (7) de la toile est libéré de la liaison d'entraînement avec un premier arbre d'entraînement (11c ; 11c'), le dispositif d'enroulement et de déroulement (8) pour les éléments de transfert (5) a son unité de bobine (8) couplée pour la liaison d'entraînement avec un second arbre d'entraînement (11c ; 11c") .

5. Convoyeur à bande (2) selon la revendication 1, **caractérisé en ce que** le dispositif d'enroulement et de déroulement (7) pour la toile (3) et le dispositif d'enroulement et de déroulement (8) pour les éléments de transfert (5) constituent conjointement une unité d'enroulement et de déroulement (10) pour la toile et les éléments de transfert, qui est situé à une première extrémité longitudinale (1a) de l'élément de protection pour débris (1) et qui se compose d'un élément de vilebrequin (11) avec un arbre d'entraînement (11c) couplé à celui-ci pouvant pivoter autour de son axe longitudinal ainsi que, d'une part, des premiers éléments d'accouplement (13 ; 13a) pour l'accouplement dudit arbre d'entraînement (11c) pour une liaison d'entraînement avec un rouleau d'enroulement (12) du dispositif d'enroulement et de déroulement (7) pour la toile (3) et pour la libération de l'arbre d'entraînement (11c) de ladite liaison avec le rouleau d'enroulement (12) du dispositif d'enroulement et de déroulement pour la toile (3), et, d'autre part, des seconds éléments d'accouplement (13 ; 13b) pour l'accouplement du même arbre d'entraînement (11c) d'une part pour la liaison d'entraînement avec une unité de bobine (8a) du dispositif d'enroulement et de déroulement (8) pour les éléments de transfert (5) et, d'autre part, pour libérer l'arbre d'entraînement de la liaison avec l'unité de bobine (8a) du dispositif d'enroulement et de déroulement (8) pour les éléments de transfert (5).

6. Convoyeur à bande (2) selon l'une quelconque des revendications précédentes, **caractérisé en ce que** l'arbre d'entraînement (11 ; 11c) est également accompagné d'éléments d'accouplement (13) pour l'accouplement de l'unité de bobine (8a) et/ou du rouleau d'enroulement (12) pour la liaison d'entraînement avec l'arbre d'entraînement (11c) ou pour la libération de celle-ci de la liaison d'entraînement avec cet arbre d'entraînement (11 ; 11c).

7. Convoyeur à bande (2) selon la revendication 5 ou 6, **caractérisé en ce que** les éléments d'accouplement (13) comprennent un accouplement magnétique.

8. Convoyeur à bande (2) selon l'une quelconque des revendications précédentes 5 à 7, **caractérisé en ce que**, lorsque l'arbre d'entraînement (11 ; 11c) tourne dans un premier sens autour de son axe longitudinal, les premiers éléments d'accouplement, c'est-à-dire les éléments d'accouplement (13 ; 13a) du dispositif d'enroulement et de déroulement (7) pour la toile (3), sont adaptés pour coupler le rouleau d'enroulement (12) du dispositif d'enroulement et de déroulement (7) pour que la toile (2) tourne avec l'arbre d'entraînement (11c), et lorsque l'arbre d'entraînement (11c) tourne dans un second sens autour de son axe longitudinal, les seconds éléments d'accouplement, c'est-à-dire les éléments d'accouplement (13 ; 13b) du dispositif d'enroulement et de déroulement (8) pour les éléments de transfert (5), sont adaptés pour coupler l'unité de bobine (8a) du dispositif d'enroulement et de déroulement (8) pour les éléments de transfert (5) pour tourner avec ledit arbre d'entraînement (11).

9. Convoyeur à bande (2) selon la revendication 8, **caractérisé en ce que**, en même temps que les premiers éléments d'accouplement (13 ; 13a) sont d'une part adaptés pour coupler le rouleau de traction (12) du dispositif d'enroulement et de déroulement (7) pour que la toile (3) tourne avec l'arbre d'entraînement (11c), les seconds éléments d'accouplement (13 ; 13b) sont à leur tour adaptés pour libérer l'unité de bobine (8a) du dispositif d'enroulement et de déroulement (8) pour les éléments de transfert (5) de la liaison avec l'arbre d'entraînement (11 ; 11c).

10. Convoyeur à bande (2) selon la revendication 9, **caractérisé en ce que**, en même temps que les seconds éléments d'accouplement (13 ; 13b) sont adaptés pour coupler l'unité de bobine (8a) du dispositif d'enroulement et de déroulement (8) pour les éléments de transfert (5) pour la liaison à l'arbre d'entraînement (11 ; 11c) entraîné en rotation par un entraînement, les premiers éléments d'accouplement (13 ; 13a) sont adaptés pour libérer le rouleau de traction (12) du dispositif d'enroulement et de déroulement (7) pour la toile (2) de la liaison avec le même arbre d'entraînement (11 ; 11c).

11. Convoyeur à bande (2) selon l'une des revendications précédentes 5 à 10, **caractérisé en ce que** l'élément de protection pour débris (1) a sa seconde extrémité longitudinale (1b), à l'opposé de l'unité d'enroulement et de déroulement (10) pour la toile et les éléments de transfert présents au niveau de la première extrémité (1a) de l'élément de protection pour débris (1), pourvu d'une paire de poulies de renvoi (6 ; 6a, 6b) pour commander le sens de déplacement des éléments de transfert (5) de toile (3).

12. Convoyeur à bande (2) selon la revendication 11, **caractérisé en ce que** les deux éléments de transfert (5 ; 5' et 5 ; 5") pour la toile (2) avancent du rouleau de traction (12) du dispositif d'enroulement et de déroulement (8) pour les éléments de transfert (5) d'abord jusqu'à chaque bord longitudinal (3a, 3b) de la toile, puis jusqu'à la poulie de renvoi (6 ; 6b et 6 ; 6a), puis, par la même poulie de renvoi (6 ; 6a et 6 ; 6b), plus loin sur le rouleau de traction (12) du dispositif d'enroulement et de déroulement (7) pour la toile (2).

13. Convoyeur à bande (2) selon la revendication 11 ou 12, **caractérisé en ce que** ledit élément de protection pour débris (1) comprend en outre des glissières (9) dans le sens de la longueur du convoyeur à bande (2) et pouvant accueillir les deux bords longitudinaux (3a, 3b) de la toile (3), moyennant quoi une première extrémité des deux glissières (9a, 9b) est pourvue d'une unité d'enroulement et de déroulement (10) pour la toile et les éléments de transfert, et une seconde extrémité, c'est-à-dire l'extrémité opposée, des deux glissières (9a, 9b) est pourvue d'une paire de poulies de renvoi (6) destinées à commander le sens de déplacement des éléments de transfert (5).

14. Convoyeur à bande (2) selon l'une quelconque des revendications précédentes, **caractérisé en ce que** l'élément de transfert (5) est un câble (5a) ou un élément analogue, et le dispositif d'enroulement et de déroulement (8) pour les éléments de transfert (5) comporte une unité de bobine (8a) ou un dispositif analogue pouvant être relié à l'arbre d'entraînement (11c).

15. Convoyeur à bande (2) selon la revendication 1, **caractérisé en ce que** le vilebrequin (11) comprend un moteur électrique (11a) relié fonctionnellement à l'arbre d'entraînement (11 ; 11c) ou une manivelle (11b) reliée à l'arbre d'entraînement (11 ; 11c).

16. Utilisation d'un élément de protection pour débris (1) du convoyeur à bande (2) selon la revendication 1 sur une bande transporteuse, dans laquelle le convoyeur à bande (2) a son sens de transport (K) dans une position inclinée par rapport au plan d'un sol ou d'une fondation similaire.

17. Utilisation d'un élément de protection pour débris (1) du convoyeur à bande (2) selon la revendication 1 entre deux convoyeurs à bande (2, 2).

18. Utilisation d'un élément de protection pour débris (1) du convoyeur à bande (2) selon la revendication 1 sous un convoyeur à bande, par laquelle le convoyeur à bande est également pourvu d'un élément de protection pour débris (1) à côté et/ou au-dessus de celui-ci.

19. Procédé d'éloignement d'un élément de protection pour débris du convoyeur à bande (2) selon la revendication 1 du dessous d'un convoyeur à bande (2), **caractérisé en ce que** le procédé comprend les étapes suivantes :
- la rotation d'un arbre d'entraînement (11 ; 11c) autour de son axe longitudinal dans un premier sens et le couplage simultané, au moyen des premiers éléments d'accouplement (13 ; 13a), c'est-à-dire les éléments d'accouplement d'un dispositif d'enroulement et de déroulement de toile, un rouleau de traction (12) du dispositif d'enroulement et de déroulement de toile (7) pour tourner avec l'arbre d'entraînement (11c), et la libération d'une unité de bobine (8a) d'un dispositif d'enroulement et de déroulement (8) pour les éléments de transfert de la liaison avec ledit arbre d'entraînement (11c),
- l'enroulement d'une toile (3) autour du rouleau d'enroulement (12) en faisant tourner ledit arbre d'entraînement (11c) autour de son axe longitudinal dans ledit premier sens,
- le fait de permettre aux éléments de transfert (5), tels qu'un câble (5a), de se dérouler de l'unité de bobine (8a) du dispositif d'enroulement et de déroulement (8) pendant que la toile (3) est enroulée autour du rouleau d'enroulement (12).

20. Procédé de réinstallation d'un élément de protection pour débris (1) du convoyeur à bande (2) selon la revendication 1 en dessous d'un convoyeur à bande (2), **caractérisé en ce que** le procédé comprend les étapes suivantes :
- la rotation d'un arbre d'entraînement (11) autour de son axe longitudinal dans un second sens et l'accouplement simultané, au moyen de seconds éléments d'accouplement (13 ; 13b), c'est-à-dire les éléments d'accouplement d'un dispositif d'enroulement et de déroulement de toile, une unité de bobine (8a) d'un dispositif d'enroulement et de déroulement (8) pour les éléments de transfert (5) de toile (3), tel qu'un câble (5a), pour tourner avec l'arbre d'entraînement (11),
- l'enroulement des éléments de transfert (5) sur l'unité de bobine (8a) du dispositif d'enroulement et de déroulement, par lequel la toile (3), qui a été enroulée sur le rouleau de traction (12), est ramenée par les éléments de transfert (5) à sa position sous le convoyeur à bande (2).

21. Procédé selon la revendication 19, **caractérisé en ce que** le procédé comprend en outre le nettoyage de la toile (3).

22. Procédé d'éloignement d'un élément de protection pour débris (1) du convoyeur à bande (2) selon la revendication 1 du dessous d'un convoyeur à bande (2), dans lequel un dispositif d'enroulement et de déroulement (8) pour les éléments de transfert (5) est en communication fonctionnelle avec un dispositif d'enroulement et de déroulement (7) pour une toile (3), pouvant toutefois être utilisée avec son propre arbre d'entraînement (11c ; 11c") et son élément de vilebrequin (11), **caractérisé en ce que** le procédé comprend les étapes suivantes :
- la rotation d'un premier arbre d'entraînement (11 ; 11c') autour de son axe longitudinal et l'accouplement d'un rouleau de traction (12) du dispositif d'enroulement et de déroulement de toile (7) au moyen d'éléments d'accouplement (13 ; 13a) pour tourner avec le premier arbre d'entraînement (11c ; 11c') et la libération d'une unité de rouleau (8a) d'un dispositif d'enroulement et de déroulement (8) pour les éléments de transfert de la liaison avec un second arbre d'entraînement (11c ; 11c"),
- l'enroulement de la toile (3) autour du rouleau d'enroulement (12) en faisant tourner ledit premier arbre d'entraînement (11c ; 11c') autour de son axe longitudinal,
- le fait de permettre aux éléments de transfert (5), tels qu'un câble (5a) de se dérouler de l'unité de bobine (8a) du dispositif d'enroulement et de déroulement (8) pendant que la toile (3) est enroulée autour du rouleau d'enroulement (12).

23. Procédé de réinstallation d'un élément de protection pour débris (1) du convoyeur à bande (2) selon la revendication 1 sous un convoyeur à bande (2), **caractérisé en ce que** le procédé comprend les étapes suivantes :
- le couplage, par le biais de seconds éléments de couplage (13 ; 13b), c'est-à-dire les éléments de couplage d'un dispositif d'enroulement et de déroulement de toile, une unité de bobine (8a) d'un dispositif d'enroulement et de déroulement (8) pour les éléments de transfert (5) de toile (3), tel qu'un câble (5a), pour tourner avec un second arbre d'entraînement (11c ; 11c"),
- la libération d'un rouleau de traction (12) d'un dispositif d'enroulement et de déroulement de la toile (7) de la liaison avec un premier arbre d'entraînement (11c; 11c'),
- l'enroulement des éléments de transfert (5) sur l'unité de bobine (8a) du dispositif d'enroulement et de déroulement, par lequel la toile, qui a été enroulée sur le rouleau de traction (12), est ramenée par les éléments de transfert (5) à sa position sous le convoyeur à bande (2).
